# EUROPÄISCHE PATENTSCHRIFT

(11) **EP 3 867 108 B1**
(45) Veröffentlichungstag und Bekanntmachung des Hinweises auf die Patenterteilung: **08.03.2023**
(21) Anmeldenummer: 19748718.4
(22) Anmeldetag: 11.07.2019
(51) Int. Cl.: B60R 22/00, B60R 22/18

(54) **GURTSCHLOSSANORDNUNG FÜR EIN FAHRZEUG, UMMANTELUNG UND VERFAHREN ZUR UMMANTELUNG EINER GURTSCHLOSSVORRICHTUNG DER GURTSCHLOSSANORDNUNG**
SAFETY BELT BUCKLE ASSEMBLY FOR A VEHICLE, CASING, AND METHOD FOR ENCASING A SAFETY BELT BUCKLE DEVICE OF THE SAFETY BELT BUCKLE ASSEMBLY
ENSEMBLE DE BOUCLE DE CEINTURE POUR UN VÉHICULE, ENVELOPPE ET PROCÉDÉ SERVANT À ENVELOPPER UN DISPOSITIF DE BOUCLE DE CEINTURE DE L'ENSEMBLE DE BOUCLE DE CEINTURE

(30) Priorität: 18.10.2018 DE 102018008260
(43) Veröffentlichungstag der Anmeldung: 25.08.2021
(73) Patentinhaber: PSA Automobiles SA, 78300 Poissy (FR)
(72) Erfinder: KLEINAU, Ingo, 65428 Rüsselsheim am Main (DE); SCHULZ, Edelgard, 65428 Rüsselsheim am Main (DE); WYDROWSKI, Sven, 65428 Rüsselsheim am Main (DE)
(74) Vertreter: Spitzfaden, Ralf
(86) Internationale Anmeldenummer: PCT/EP2019/068666
(87) Internationale Veröffentlichungsnummer: WO 2020/078597

(56) Entgegenhaltungen:
- EP-A1- 1 688 324
- DE-A1-102012 107 294
- DE-A1-102016 004 139
- DE-A1-102016 101 086
- FR-A1- 2 931 422
- JP-A- 2012 121 511
- JP-A- 2016 137 884
- US-A- 4 915 451
- US-A1- 2014 150 221
- US-B2- 7 648 171

## Beschreibung

### Technisches Gebiet:

Die Erfindung betrifft eine Gurtschlossanordnung für ein Fahrzeug mit den Merkmalen des Anspruchs 1 und ein Fahrzeug mit der Gurtschlossanordnung nach Anspruch 11.

### Hintergrund:

Ein Gurtschloss für einen Sicherheitsgurt, das in einer Sitzbank eines Fahrzeugs zum Anschnallen eines Insassen vorgesehen ist, ist aus dem Stand der Technik hinreichend bekannt. Bekannt ist auch bereits, das Gurtschloss mit einer Hülle zu versehen, um eine ungewollte Entriegelung einer Verriegelungsplatte des Gurtschlosses bei einer Aktivierung eines Gurtstraffers zu verhindern.

Beispielsweise beschreibt die Druckschrift US 7 648 171 B2 eine Gurtschlossanordnung mit einem Gurtschlosskopf und mit einer Anbindung, die den Gurtschlosskopf mit der Fahrzeugkarosserie verbindet und mit einer Hülle, die einen Teil des Gurtschlosskopfes und einen Teil der Anbindung bedeckt, um ein ungewolltes Abschnallen des Insassen bei einer Aktivierung eines Gurtstraffes und einer dadurch erzeugten Beschleunigung des Gurtschlosskopfes zu verhindern.

In der Druckschrift FR 2 931 422 A1 wird ein Fahrzeug mit klappbarer Sitzbank und einer Gurtschlossvorrichtung die dem Oberbegriff des Anspruchs 1 entspricht, mit zwei Gurtschlössern an unterschiedlich langen flexiblen Riemen und einem Klettband zur Anbringung am Sitz offenbart. Beim längeren Riemen ist das Gehäuse zum Riemen verlängert.

In der Druckschrift JP 2012 121511 A wird ein Fahrzeug mit Sitzbank und einer Gurtschlossvorrichtung mit zwei Gurtschlössern, wobei eines an einer Metallschiene und das andere mit einer Metallschiene und einem zusätzlichen Riemen als Verlängerung offenbart ist. Um den Riemen ist eine vom Gurtschlossgehäuse getrennte Kunststoffummantelung, die verhindern soll, dass kleine Gegenstände in die Öffnung der Sitzbank, wo die Gurtschlösser montiert sind, fallen.

In der Druckschrift EP 1 688 324 A1 wird ein Fahrzeug mit Sitzbank und einer Gurtschlossvorrichtung mit einem Gurtschloss offenbart. Das Gurtschlossgehäuse weist eine zusätzliche Ummantelung auf. Zur Versteifung des flexiblen Gurtes zwischen Gurtschlossgehäuse und Befestigungsplatte am Fahrzeug ist dieser Gurt vollständig ummantelt. Die Ummantelung hat zur besseren Anbringung einen längsverlaufenden Schlitz, so dass beide Seiten um den Schlitz leichter verformbar sind. Allerdings soll das Gurtschloss in aufrechter Position bleiben. Daher muss die Wirkung des Schlitzes aufgehoben werden. Hierfür werden die beiden Seiten um den Schlitz vernäht und mit einem Klebeband fixiert.

In der Druckschrift EP 2 439 101 A1 wird ein Kindersitz mit Gurtschlossvorrichtung mit einem Gurtschloss offenbart. Das Gurtschlossgehäuse ist mit einem Haltegurt an dem Kindersitz befestigt. Um den Haltegurt ist eine Ummantelung aus Kunststoff mit einem Schlitz angeordnet. Durch diese Ummantelung muss der Haltegurt durchgeführt und im Kindersitz arretiert werden. Die Ummantelung ist angeschrägt, damit diese vom Kind wegführt. Weiterhin ist ein Kabel durch die Fassung und die Ummantelung gezogen, damit das Schließen des Gurtschlosses überwacht werden kann.

### Beschreibung:

Der Erfindung liegt die Aufgabe zugrunde, eine funktional verbesserte und leicht zu montierende Ummantelung für eine Gurtschlossvorrichtung einer Gurtschlossanordnung bereitzustellen. Diese Aufgabe wird durch eine Gurtschlossanordnung für ein Fahrzeug mit den Merkmalen des Anspruchs 1 gelöst. Bevorzugte oder vorteilhafte Ausführungsformen der Erfindung ergeben sich aus den Unteransprüchen.

Es wird eine Gurtschlossanordnung für ein Fahrzeug, zum Beispiel für einen PKW mit mindestens einer Sitzbank, auf der mehrere Insassen Platz nehmen können, vorgeschlagen.

Die Gurtschlossanordnung umfasst eine erste Gurtschlossvorrichtung und eine zweite Gurtschlossvorrichtung. Dadurch kann sich ein erster Insasse mit der ersten Gurtschlossvorrichtung anschnallen und ein zweiter Insasse, der neben dem ersten Insassen auf der Sitzbank sitzt, mit der zweiten Gurtschlossvorrichtung anschnallen. Insbesondere sind beide Gurtschlossvorrichtungen an einer gemeinsamen Stelle zwischen den beiden Insassen angeordnet.

Beispielsweise umfasst jede der Gurtschlossvorrichtungen ein Schlosskopfgehäuse mit einer kopfseitigen Gehäuseöffnung. Vorzugsweise ist das Schlosskopfgehäuse zweiteilig ausgebildet, insbesondere umfasst das Schlosskopfgehäuse einen ersten Gehäuseabschnitt und einen zweiten Gehäuseabschnitt. Bevorzugt sind der erste und zweite Gehäuseabschnitt zu dem Schlosskopfgehäuse zusammensetzbar. Bevorzugt ist eine Schlosskopfmechanik der jeweiligen Gurtschlossvorrichtung insbesondere vollständig von dem Schlosskopfgehäuse umgeben. Beispielsweise umfasst jede Schlosskopfmechanik eine Öffnung und eine Drucktaste, wobei die Öffnung zur Aufnahme und Verriegelung einer Gurtzunge eines Sicherheitsgurts des Fahrzeugs ausgebildet ist, mit dem sich einer der Insassen anschnallen kann. Insbesondere ist die Drucktaste zur Entriegelung der Gurtzunge aus der Öffnung und dadurch insbesondere zum Abschnallen des Insassen ausgebildet. Besonders bevorzugt ist, dass die Öffnung für die Schlosszunge und die Drucktaste durch die Gehäuseöffnung des jeweiligen Schlosskopfgehäuses sichtbar und/oder zugängig sind. Optional ergänzend umfasst jede Schlosskopfmechanik eine elektrische Kontaktschnittstelle für einen Kabelstrang der Gurtschlossvorrichtung und eine mechanische Befestigungsschnittstelle für ein Anbindungselement der Gurtschlossvorrichtung. Das Anbindungselement kann z. B. als ein Metallband, als ein Stahlseil oder als ein Gurtband ausgebildet sein.

Erfindungsgemäß umfasst jede der Gurtschlossvorrichtungen das Anbindungselement und den Kabelstrang. Bevorzugt ist das Anbindungselement der ersten Gurtschlossvorrichtung flexibel und/oder biegsam, z. B. als Stahlseil oder als Gurtband ausgebildet. Insbesondere ist das Anbindungselement der zweiten Gurtschlossvorrichtung biegesteif und/oder starr, z. B. als das Metallband ausgebildet. Jedes Anbindungselement und jeder Kabelstrang ist, insbesondere mit entsprechenden Gegenschnittstellen an ihren oberen Enden, in dem jeweiligen Schlosskopfgehäuse befestigt, insbesondere ist/sind der Kabelstrang mit der elektrischen Kontaktschnittstelle und/oder das Anbindungselement mit der mechanischen Befestigungsschnittstelle verbunden.

Vorzugsweise stehen die Anbindungselemente und der jeweilige Kabelstrang von dem entsprechenden Schlosskopfgehäuse in eine Längsrichtung nach unten ab, insbesondere ragen sie aus dem Schlosskopfgehäuse entlang der Längserstreckung und/oder in Längsrichtung heraus. Insbesondere weisen beide Anbindungselemente jeweils eine Verankerungsschnittstelle auf, mittels der sie in einem Verankerungspunkt miteinander verbunden sind. Alternativ können beide Anbindungselemente jeweils eine eigene Verankerungsschnittstelle und einen eigenständigen Verankerungspunkt zur Karosserie besitzen. Bevorzugt ist/sind in beiden Fällen die Verankerungsschnittstelle und/oder der Verankerungspunkt in einem unteren Endbereich der beiden Anbindungselemente angeordnet. Insbesondere sind die beiden Gurtschlossvorrichtungen in dem Verankerungspunkt gemeinsam oder getrennt an einer Fahrzeugstruktur des Fahrzeugs verankerbar und/oder verankert.

Die erste und zweite Gurtschlossvorrichtung sind insbesondere unmittelbar nebeneinander oder hintereinander, bevorzugt mit einem deutlichen Längenunterschied zueinander, angeordnet. Alternativ oder ergänzend kontaktieren sich die erste und zweite Gurtschlossvorrichtung bereichsweise. Beispielsweise kann das Schlosskopfgehäuse der zweiten Gurtschlossvorrichtung das Anbindungselement und/oder den Kabelstrang der ersten Gurtschlossvorrichtung kontaktieren. Alternativ oder optional ergänzend kann das Schlosskopfgehäuse der zweiten Gurtschlossvorrichtung eine Unterseite, Unterkante, Seitenfläche und/oder Seitenkante des Schlosskopfgehäuses der ersten Gurtschlossvorrichtung kontaktieren. Dies kann insbesondere dann der Fall sein, wenn der jeweilige Insasse über die erste oder zweite Gurtschlossvorrichtung angeschnallt ist und diese dadurch entsprechend den Bewegungen des Insassen mitbewegt wird, sowie bei Verlagerung des Insassen durch schnellen Kurvenfahrten oder bei einem Unfallgeschehen.

Die Gurtschlossanordnung umfasst eine Ummantelung, die bevorzugt zum teilweisen, insbesondere radialen, Ummanteln der ersten Gurtschlossvorrichtung ausgebildet ist. Im Rahmen der Erfindung ist es vorgesehen, dass die erste Gurtschlossvorrichtung von der Ummantelung teilweise ummantelt, insbesondere umgegeben, ist. Die zweite Gurtschlossvorrichtung ist ummantelungsfrei. Insbesondere ist die zweite Gurtschlossvorrichtung nicht von der Ummantelung ummantelt.

In einer möglichen Ausführungsform der Erfindung überragt die erste Gurtschlossvorrichtung die zweite Gurtschlossvorrichtung in ihrer Länge. Vorzugsweise weist die erste Gurtschlossvorrichtung ein längeres Anbindungselement und/oder einen längeren Kabelstrang auf als die zweite Gurtschlossvorrichtung. Durch die unterschiedlichen Längen kann eine Erreichbarkeit der jeweiligen Gurtschlossvorrichtung von den sich anschnallenden Insassen verbessert werden und dadurch ein Komfort beim Anschnallen erhöht werden.

Für den Fall, dass zwei Insassen mittels der ersten und zweiten Gurtschlossvorrichtung angeschnallt sind, kann es z. B. durch Bewegungen mindestens eines der Insassen und/oder durch auftretende Kräfte bei schnellen Kurvenfahrten und/oder bei einem Aufprall des Fahrzeugs, insbesondere einem Unfallgeschehen, vorkommen, dass sich das Gurtschlossgehäuse der ersten Gurtschlossvorrichtung über die Gehäuseöffnung des Gurtschlossgehäuses der zweiten Gurtschlossvorrichtung schiebt. Dieses Überschieben wird insbesondere dadurch begünstigt, dass die erste Gurtschlossvorrichtung die zweite Gurtschlossvorrichtung längenmäßig überragt und dass das Anbindungselement im Gegensatz zu dem der zweiten Gurtschlossvorrichtung flexibel und/oder biegsam ist. Möglich ist, dass die Drucktaste des zweiten Gurtschlosses durch eine Unterkante und/oder Seitenkante des Gurtschlossgehäuses der ersten Gurtschlossvorrichtung ungewollt und/oder unbemerkt betätigt werden kann. Es kann dadurch vorkommen, dass der Insasse, der die zweite Gurtschlossvorrichtung zum Anschnallen nutzt, ungewollt und/oder unbemerkt abgeschnallt wird und keine Rückhaltewirkung mehr vorliegt.

Um die Gefahr des ungewollten und/oder unbemerkten Abschnallens zu vermeiden, ist die teilweise Ummantelung für die erste Gurtschlossvorrichtung vorgesehen. Insbesondere dient die Ummantelung als eine Sicherung gegen ein ungewolltes und/oder unbemerktes Abschnallen des Insassen, der an der zweiten Gurtschlossvorrichtung angeschnallt ist. Vorzugsweise ist das Gurtschlossgehäuse der ersten Gurtschlossvorrichtung hierfür so ummantelt, dass deren Unterkante und/oder Seitenkante nach außen, insbesondere an einer Außen- bzw. Sichtseite der Ummantelung, abgeflacht ist/sind. Insbesondere zeichnen/zeichnet sich die Unterkante und/oder Seitenkante nicht als Ecke und/oder Kante an der Außen- und/oder Sichtseite ab. Im Speziellen wird verhindert, dass sich die Unterkante und/oder Seitenkante über die Gehäuseöffnung des Gurtschlossgehäuses der zweiten Gurtschlossvorrichtung schiebt und die Drucktaste betätigt. Insbesondere ist das Gurtschlossgehäuse der ersten Gurtschlossvorrichtung mittels der Ummantelung an einem Eindringen in die Gehäuseöffnung des Gurtschlossgehäuses der zweiten Gurtschlossvorrichtung gehindert.

Weiterhin kann durch die bereichsweise Ummantelung der ersten Gurtschlossvorrichtung eine Entstehung von unangenehmen Klappergeräuschen zwischen den beiden Gurtschlossvorrichtungen vermieden werden. Ein weiterer Vorteil der Ummantelung ist, dass der von der Ummantelung ummantelte Bereich der ersten Gurtschlossvorrichtung vor einer äußeren Krafteinwirkung, z. B. einem Abknicken, geschützt ist und eine Beschädigung dadurch vermieden werden kann.

Erfindungsgemäß sind das Anbindungselement und der Kabelstrang zumindest der ersten Gurtschlossvorrichtung, insbesondere außerhalb des Schlosskopfgehäuses und/oder oberhalb des Verankerungspunkts, in einem Verbindungsabschnitt miteinander verbunden. Der Verbindungsabschnitt weist ein unteres Ende auf. Insbesondere verlaufen das Anbindungselement und der Kabelstrang von dem unteren Ende des Verbindungsabschnitts aus voneinander separat. Insbesondere können das Anbindungselement der ersten Gurtschlossvorrichtung und das Anbindungselement der zweiten Gurtschlossvorrichtung dadurch im weiteren Verlauf ihrer Längserstreckung in dem gemeinsamen Verankerungspunkt miteinander verbunden und an der Fahrzeugstruktur befestigt werden. Gleiches gilt für den weiteren Verlauf von beiden Gurtschlossvorrichtungen und beiden Anbindungselementen bezüglich ihrer Längserstreckung im Falle von alternativ getrennten Verankerungspunkten anstatt eines einzelnen gemeinsamen Verankerungspunktes.

In einer möglichen konstruktiven Umsetzung der Erfindung erstreckt sich die Ummantelung von dem unteren Ende des Verbindungsabschnitts zu dem Schlosskopfgehäuse der ersten Gurtschlossvorrichtung. Insbesondere kann sie sich von dem unteren Ende zu dem Schlosskopfgehäuse erstrecken. Dadurch kann die Ummantelung den Verbindungsabschnitt insbesondere in die Längserstreckung und/oder Längsrichtung vollständig ummanteln und das Anbindungselement, den Kabelstrang und das Schlosskopfgehäuse, zumindest abschnittsweise ummanteln. Bevorzugt ummantelt die Ummantelung den Verbindungsabschnitt vollständig und das Anbindungselement, den Kabelstrang und das Schlosskopfgehäuse der ersten Gurtschlossvorrichtung zumindest abschnittsweise.

In einer möglichen Ausführungsform der Erfindung weist das Schlosskopfgehäuse, insbesondere der ersten Gurtschlossvorrichtung, einen sich an die Gehäuseöffnung anschließenden Randbereich auf. Vorzugsweise erstreckt sich die Ummantelung von dem unteren Ende des Verbindungsabschnitts bis zu dem Randbereich und/oder bis in den Randbereich hinein. Insbesondere ragen das separat von dem Kabelstrang verlaufende Anbindungselement und der Kabelstrang unten aus der Ummantelung heraus. Im Speziellen ist das Schlosskopfgehäuse größtenteils, bevorzugt unter Aussparung der Gehäuseöffnung und/oder unter Aussparung eines unmittelbar an die Gehäuseöffnung angrenzenden Teils des Randbereichs, von der Ummantelung ummantelt, insbesondere umgeben.

In einer möglichen konstruktiven Ausgestaltung der Erfindung beträgt eine Breite des Randbereichs, insbesondere ausgehend von der Gehäuseöffnung nach unten, mindestens 4 Millimeter und vorzugsweise mindestens 8 Millimeter. Alternativ oder optional ergänzend beträgt die Breite des Randbereichs maximal bis zu 14 mm.

Eine weitere mögliche konstruktive Umsetzung der Erfindung sieht vor, dass die Ummantelung ein lang gestreckter Hohlkörper ist. Beispielsweise weist die Ummantelung einen im Wesentlichen rechteckigen Querschnitt auf. Vorzugsweise beträgt eine Materialstärke der Ummantelung mindestens 1,7 Millimeter und insbesondere mindestens 1,9 Millimeter. Alternativ oder optional ergänzend beträgt die Materialstärke der Ummantelung maximal bis zu 2,4 Millimeter. Beispielsweise ist die Ummantelung aus einem thermoplastischen Elastomer, insbesondere aus thermoplastischen Polyolefine Vulkanisate, im Speziellen aus einem thermoplastischen Vulkanisat oder aus einem vernetzten thermoplastischen Elastomer auf Olefinbasis, z. B. Polypropylen (PP) und Ethylen-Propylen-Dien-Kautschuk (EPDM), gebildet. Bevorzugt weist die Ummantelung, insbesondere das thermoplastische Vulkanisat oder das thermoplastische Elastomer, eine Schore A Härte von mindestens 40, vorzugsweise von mindestens 60 und/oder von maximal bis zu 80 auf.

Erfindungsgemäß ist die Ummantelung entlang ihrer Längserstreckung verjüngt ausgebildet. Beispielsweise nimmt eine Breite des Querschnitts der Ummantelung entlang deren Längserstreckung ab. Die Ummantelung umfasst einen bevorzugt breiten Kopfabschnitt, der insbesondere zum Ummanteln eines Großteils des Schlosskopfgehäuses der ersten Gurtschlossvorrichtung vorgesehen und/oder ausgebildet ist. Die Ummantelung umfasst einen Fußabschnitt , der insbesondere gegenüber dem Kopfabschnitt verjüngt ist. Der Fußabschnitt ist insbesondere zum vollständigen Ummanteln des Verbindungsabschnitts und insbesondere zur teilweisen Ummantelung des Anbindungselements und des Kabelstrangs ausgebildet und/oder vorgesehen.

Der Kopfabschnitt weist eine innere Breite, insbesondere eine lichte Breite eines Hohlraums der Ummantelung, und eine innere Tiefe, insbesondere eine lichte Tiefe des Hohlraums der Ummantelung, auf. In einer bevorzugten konstruktiven Ausgestaltung der Erfindung entspricht die innere Breite des Kopfabschnitts einer Gesamtbreite des Schlosskopfgehäuses der ersten Gurtschlossvorrichtung. Alternativ oder optional ergänzend entspricht die innere Tiefe des Kopfabschnitts einer Gesamttiefe des Schlosskopfgehäuses der ersten Gurtschlossvorrichtung. Dadurch kann in vorteilhafter Weise erreicht werden, dass die Ummantelung, insbesondere der Kopfabschnitt, das Schlosskopfgehäuse in einer Übergangspassung oder in einer Presspassung ummantelt und/oder ummanteln kann. Dadurch kann der Kopfabschnitt sicher und rutschfrei an dem Schlosskopfgehäuse angebracht werden/sein.

Erfindungsgemäß ist in den Fußabschnitt der Ummantelung ein Schlitz eingebracht und verläuft in die Längserstreckung der Ummantelung, insbesondere von einem unteren Ende der Ummantelung in Richtung des Kopfabschnitts. Vorteilhaft ist, dass die Ummantelung durch den Schlitz einfach und schnell an der ersten Gurtschlossvorrichtung montiert werden kann. Insbesondere kann die Ummantelung im Bereich des Schlitzes auseinander gezogenen und/oder gedehnt werden, sodass sich das Anbindungselement und der Kabelstrang nicht in der Ummantelung verfangen, wenn die Ummantelung über das Anbindungselement und den Kabelstrang in Richtung des Gurtschlossgehäuses der ersten Gurtschlossvorrichtung gezogen wird. Im Speziellen hilft der Schlitz die Ummantelung im unteren Bereich flexibler zu gestalten, z. B. um eine Biegewechselprüfung im Rahmen einer Komponentenvalidierung zu bestehen.

Vorzugsweise an den oberen Enden, insbesondere an den entsprechenden Gegenschnittstellen, werden das Anbindungselement und der Kabelstrang in dem Gurtschlossgehäuse, insbesondere an der mechanischen Befestigungsschnittstelle und an der elektrischen Kontaktschnittstelle, befestigt. Hierfür ist das Gurtschlossgehäuse zunächst in den ersten Gehäuseabschnitt und den zweiten Gehäuseabschnitt zerlegt, sodass die Gegenschnittstellen des Anbindungselements und des Kabelstrangs an den hierfür vorgesehenen Schnittstellen in einem der Gehäuseabschnitte befestigt werden können. Bevorzugt werden die Gehäuseabschnitte danach wieder zu dem Gurtschlossgehäuse zusammengesetzt. Alternativ kann die Ummantelung, z. B. im Rahmen einer Nachrüstung von Fahrzeugen mit bereits integrierten Gurtschlossvorrichtungen, auch über die fertig montierten und zusammengesetzten Gehäuseabschnitte gezogen werden.

Anschließend wird die Ummantelung im Rahmen des Verfahrens über das Gurtschlossgehäuse gezogen, insbesondere bis zu dem Randbereich und/oder bis in den Randbereich hinein. Vorzugsweise wird die Ummantelung nur so weit über das Gurtschlossgehäuse und zu dem Randbereich und/oder in diesen hineingezogen, dass die Ummantelung den Verbindungsabschnitt, insbesondere mit ihrem unteren Ende, noch vollständig ummantelt und/oder dass der Verbindungsabschnitt noch vollständig von der Ummantelung bedeckt ist.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine Draufsicht von vorne auf eine Gurtschlossanordnung für ein Fahrzeug mit einer ersten und zweiten Gurtschlossvorrichtung;
- Figur 2: eine Explosionsdarstellung der ersten Gurtschlossvorrichtung;
- Figur 3: eine Ummantelung für eine erste Gurtschlossvorrichtung;
- Figur 4a, b: Detaildarstellungen der ersten Gurtschlossvorrichtung;
- Figur 5a, b: Eine Draufsicht von vorne und ein Querschnitt entlang der Schnittlinie F-F auf ein ummanteltes Schlosskopfgehäuse der ersten Gurtschlossvorrichtung und auf einen Kopfabschnitt der Ummantelung.

Einander entsprechende oder gleiche Teile sind in den Figuren jeweils mit den gleichen Bezugszeichen versehen.

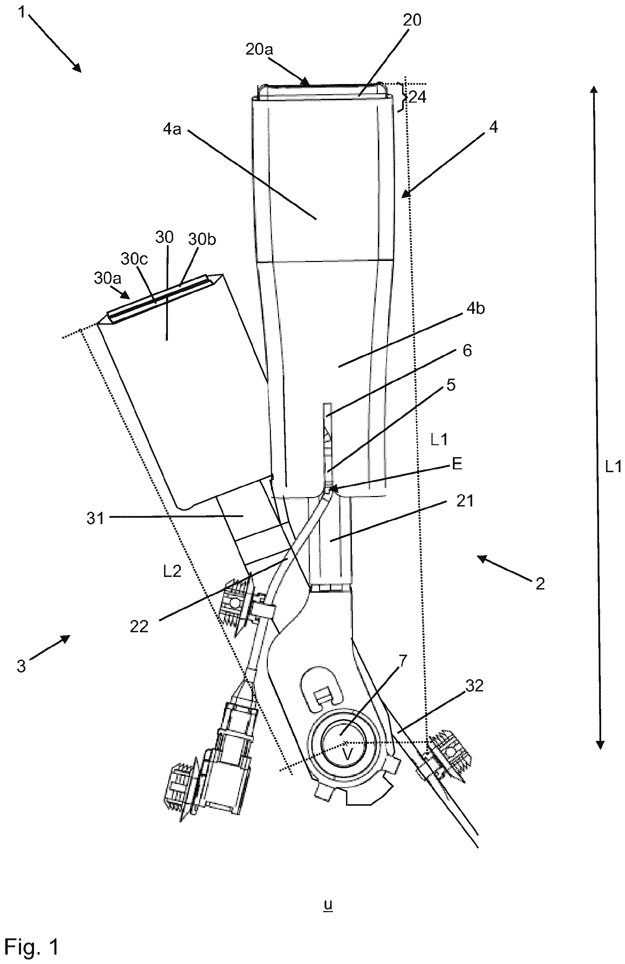

Figur 1 zeigt eine Gurtschlossanordnung 1 für ein Fahrzeug, zum Beispiel für einen PKW. Die Gurtschlossanordnung 1 ist an einer Sitzbank des Fahrzeugs, auf der mehrere Insassen Platz nehmen können, anordbar.

Die Gurtschlossanordnung 1 umfasst eine erste Gurtschlossvorrichtung 2 und eine zweite Gurtschlossvorrichtung 3, die nebeneinander oder hintereinander angeordnet sind. Die erste Gurtschlossvorrichtung 2 weist ein Schlosskopfgehäuse 20 mit einer kopfseitigen Gehäuseöffnung 20a, ein Anbindungselement 21 und einen Kabelstrang 22 auf. Das Anbindungselement 21 ist z. B. als ein biegsames und/oder flexibles Stahlseil oder Gurtband ausgebildet. Die zweite Gurtschlossvorrichtung 3 weist ebenfalls ein Schlosskopfgehäuse 30 mit einer kopfseitigen Gehäuseöffnung 30a, ein Anbindungselement 31 und einen Kabelstrang 32 auf. Das Anbindungselement 31 des Schlosskopfgehäuses 30 der zweiten Gurtschlossvorrichtung 3 ist z. B. als ein starres Metallband ausgebildet.

Jedes Schlosskopfgehäuse 20, 30 weist eine Schlosskopfmechanik auf, die innerhalb des jeweiligen Schlosskopfgehäuses 20, 30 angeordnet ist. Die Schlosskopfmechanik umfasst unter anderem jeweils eine Drucktaste 20b, 30b und jeweils eine Öffnung 20c, 30c, in die eine Gurtzunge eines Sicherheitsgurts des Fahrzeugs einsteckbar und darin zum Anschnallen des jeweiligen Insassen verrastbar ist. Die jeweilige Öffnung 20a, 30a bietet einen Zugriff auf die entsprechende Drucktaste 20b, 30b und auf die entsprechende Öffnung zum Einstecken der Gurtzunge 20c, 30b. Diese schließen mit der Öffnung 20a, 30a ab oder ragen ein Stück aus dieser hervor.

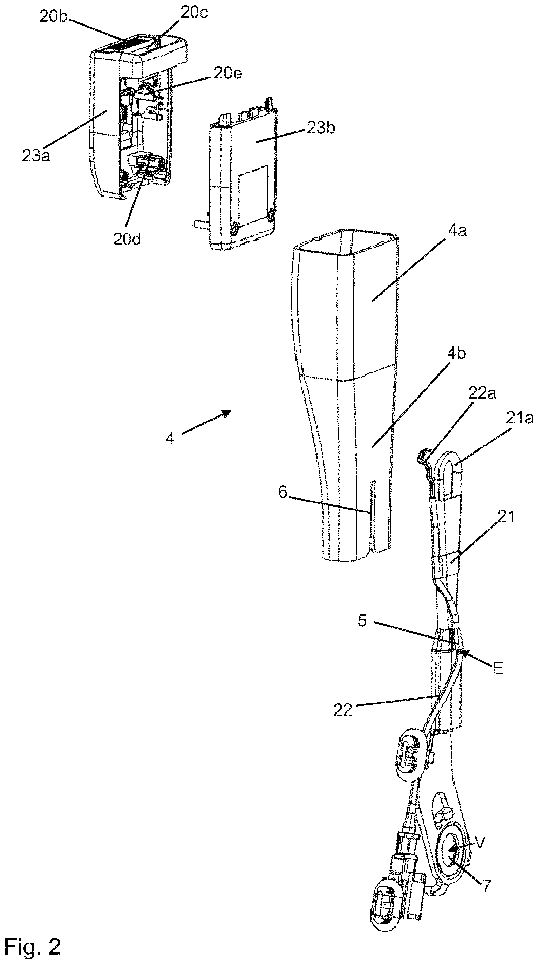

Die Schlosskopfmechanik des Schlosskopfgehäuses 20, 30 umfasst weiterhin eine elektrische Kontaktschnittstelle 20d (Fig. 2) für eine elektrische Gegenschnittstelle 22a (Fig. 2) des Kabelstrangs 22 und eine mechanische Verbindungschnittstelle 20e (Fig. 2) für eine mechanische Gegenschnittstelle 21a (Fig. 2) des Anbindungselements 21. Jedes Anbindungselement 21, 31 ist an der jeweiligen mechanischen Verbindungsschnittstelle 20e befestigt und jeder Kabelstrang 22, 32 ist an die entsprechende elektrische Kontaktschnittstelle 20d angebunden. Über die mechanischen Verbindungsschnittstellen 20e, 21a ist jedes Schlosskopfgehäuse 20, 30 sicher, insbesondere über das jeweilige Anbindungselement 21, 31 an die Fahrzeugstruktur anbindbar und/oder angebunden. Das Anbindungselement 21 der ersten Gurtschlossvorrichtung 2 ist als Stahlseil oder Gurtband flexibel und/oder biegsam ausgebildet. Dagegen ist das Anbindungselement 31 der zweiten Gurtschlossvorrichtung 3 als Metallband biegesteif und/oder starr ausgebildet.

Zur Anbindung an die Fahrzeugstruktur ist in jedes Anbindungselement 21, 31 eine Verankerungsschnittstelle 7 eingebracht, mittels der sie in einer gemeinsamen Verankerung miteinander verbunden sind und an der Fahrzeugstruktur, die zum Beispiel unterhalb der Sitzbank angeordnet ist, verankerbar und/oder verankert sind. Beispielsweise können über die elektrischen Kontaktschnittstellen 22a, 20d elektrische Signale an einen Bordcomputer des Fahrzeugs übermittelt werden, die z. B. zur Anschnallüberwachung der Insassen, dienen können.

Die erste Gurtschlossvorrichtung 2 überragt die zweite Gurtschlossvorrichtung 3 in ihrer Länge, insbesondere ist eine von einer Oberkante des Schlosskopfgehäuses 20 der ersten Gurtschlossvorrichtung 2 bis zu dem Verankerungspunkt V gemessene Länge L1 länger als eine Länge L2, die von dem Schlosskopfgehäuse 30 der zweiten Gurtschlossvorrichtung 3 bis zu dem Verankerungspunkt V gemessen ist. Der Längenunterschied kommt dadurch zustande, dass das Anbindungselement 31 und/oder der Kabelstrang 32 der zweiten Gurtschlossvorrichtung 3 kürzer ist/sind als das Anbindungselement 21 und/oder der Kabelstrang 22 der ersten Gurtschlossvorrichtung 2.

Mittels der ersten Gurtschlossvorrichtung 2 kann sich ein erster Insasse auf der Sitzbank anschnallen und mittels der zweiten Gurtschlossvorrichtung 3 kann sich ein neben dem ersten Insassen sitzender zweite Insasse auf der Sitzbank anschnallen. Im integrierten Zustand in dem Fahrzeug ist die Gurtschlossanordnung 1 hierfür zwischen den beiden Insassen positioniert.

Die Gurtschlossanordnung 1 umfasst eine Ummantelung 4, die die erste Gurtschlossvorrichtung 2 teilweise ummantelt, insbesondere radial vollständig umgibt. Die zweite Gurtschlossvorrichtung 3 ist ummantelungsfrei ausgebildet, insbesondere weist die zweite Gurtschlossvorrichtung 3 keine Ummantelung 4 auf.

In Figur 2 ist eine perspektivische Explosionsdarstellung der ersten Gurtschlossvorrichtung 2 gezeigt. Das Schlosskopfgehäuse 20 ist zweiteilig ausgebildet und umfasst einen ersten Gehäuseabschnitt 23a und einen zweiten Gehäuseabschnitt 23b, die zu dem Schlosskopfgehäuse 20 form- und/oder kraftschlüssig zusammensetzbar sind.

Das Anbindungselement 21 und der Kabelstrang 22 verlaufen im Wesentlichen gleichgerichtet in die Längserstreckung L2 zueinander und sind in einem Verbindungsabschnitt 5 miteinander verbunden. In dem Verbindungsabschnitt 5 sind das Anbindungselement 21 und der Kabelstrang 22 miteinander z. B. vercrimpt. Der Verbindungsabschnitt 5 weist ein unteres Ende E auf, von dem aus das Anbindungselement 21 und der Kabelstrang 22 separat voneinander nach unten u verlaufen.

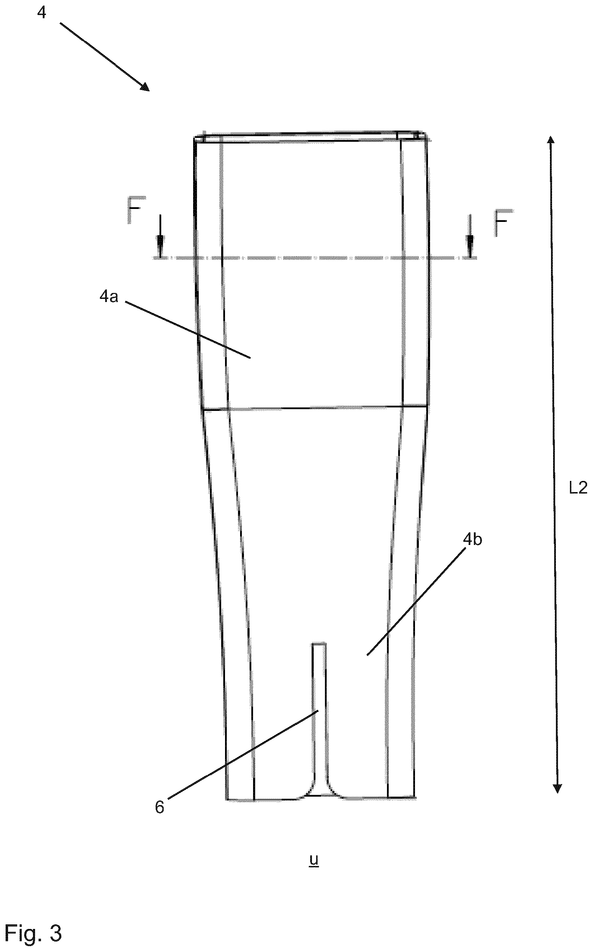

Die Ummantelung 4 ist in der Figur 2 im montierten Zustand an der ersten Gurtschlossvorrichtung 2 und in der Figur 3 als separates Bauteil in einer Draufsicht von vorne dargestellt. Die Ummantelung 4 ist als ein langgestreckter Hohlkörper mit einem im Wesentlichen rechteckigen Querschnitt ausgebildet. Die Ummantelung 4 weist einen nach oben ausgerichteten Kopfabschnitt 4a zum bereichsweisen Ummanteln des Schlosskopfgehäuses 20 und einen nach unten u ausgerichteten Fußabschnitt 4b zur bereichsweisen Ummantelung des Anbindungselements 21 und des Kabelstrangs 22 auf.

Der Fußabschnitt 4b weist einen sich in Längserstreckung L2 von unten u nach oben verlaufenden Schlitz 6 auf. Entlang ihrer Längserstreckung L2 ist die Ummantelung 4 verjüngt, insbesondere nimmt eine Breite des Querschnitts im Verlauf des Fußabschnitts 4b von oben nach unten u ab.

Die Ummantelung 4 ist aus einem thermoplastischen Elastomer, z. B. aus einem thermoplastischen Vulkanisat oder aus einem vernetzten thermoplastischen Elastomer auf Olefinbasis, z. B. Polypropylen (PP) und Ethylen-Propylen-Dien-Kautschuk (EPDM), mit einer Schore A Härte von mindestens 40, vorzugsweise von mindestens 60 und/oder von maximal bis zu 80 auf.

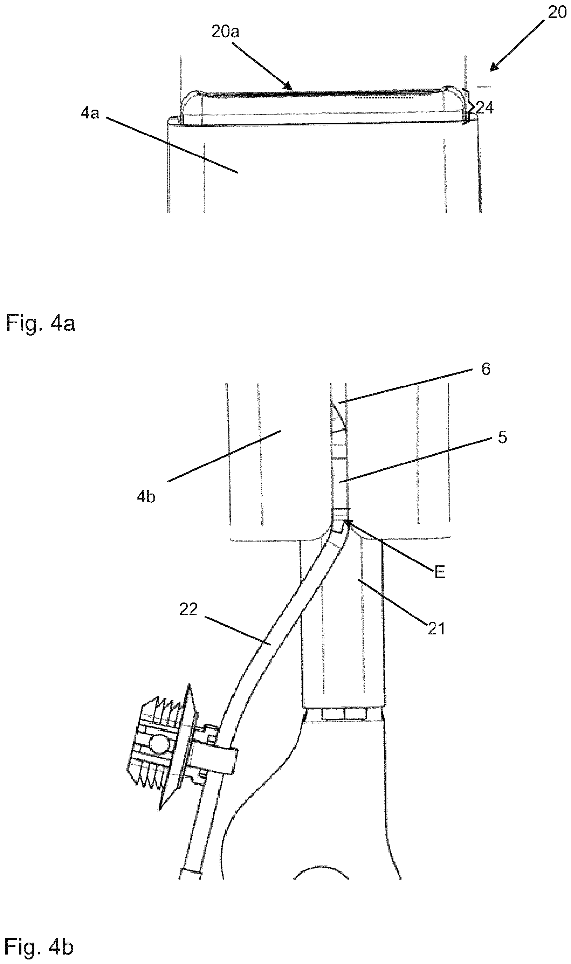

Die Figur 4a zeigt eine Draufsicht von vorne auf einen detaillierten Ausschnitt des Schlosskopfgehäuses 20, das von der Ummantelung 4, insbesondere von dem Kopfabschnitt 4a, ummantelt ist. Das Schlosskopfgehäuse 20 weist die kopfseitige Gehäuseöffnung 20a auf, wobei an die Gehäuseöffnung 20a ein Randbereich 24 angrenzt und/oder anschließt, der sich insbesondere von der Gehäuseöffnung 20a nach unten u erstreckt. Der Randbereich 24 hat eine von der Gehäuseöffnung 20a nach unten gemessene Breite von mindestens 4 Millimeter, vorzugsweise von mindestens 8 Millimeter und oder von maximal bis zu 14 mm.

Die Ummantelung 4 ummantelt das Schlosskopfgehäuse 20 insbesondere mit dem Kopfabschnitt 4a nahezu vollständig, wobei der Randbereich 24 von der Ummantelung 4 weitestgehend oder vollständig ausgespart ist. Insbesondere ist die Ummantelung 4 bis zu dem Randbereich 24 und/oder in den Randbereich 24 hinein über das Schlosskopfgehäuse 20 gezogen. Ein oberer Rand des Kopfabschnitts 4a ist hierfür um den Randbereich 24 beabstandet von der Gehäuseöffnung 20a angeordnet.

Eine Draufsicht von vorne auf einen detaillierten Ausschnitt des Fußabschnitts 4b der Ummantelung 4 und auf den aus diesem herausragenden Kabelstrang 22 und auf das Anbindungselement 21 ist in der Figur 4b dargestellt. Der Fußabschnitt 4b ummantelt die erste Gurtschlossvorrichtung 2 so, dass er mit dem unteren Ende E des Verbindungsabschnitts 5 abschließt oder dieses um ein kleines Stück z. B. überragt. Insbesondere ist die Ummantelung 4 soweit über die erste Gurtschlossvorrichtung 2 gezogen, dass der Fußabschnitt 4b den Verbindungsbereich 5 in Längserstreckung L1, L2 vollständig ummantelt und insbesondere radial umgibt. Der Schlitz 6 verläuft dort, wo der Verbindungsbereich 6 zwischen dem Kabelstrang 22 und dem Anbindungselement 21 angeordnet ist, sodass ein übermäßiger Druck durch die Ummantelung 4 auf den Verbindungsbereich 6 und eine dadurch hervorgerufene Beschädigung vermieden werden kann.

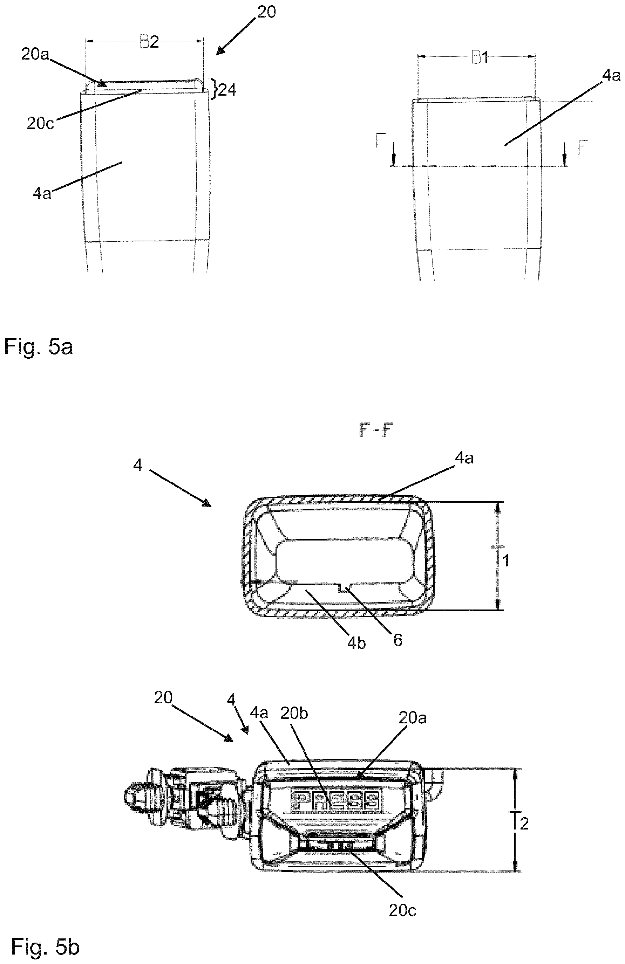

In der Figur 5a ist eine Draufsicht von vorne auf das mit der Ummantelung 4 ummantelte Schlosskopfgehäuse 20 der ersten Gurtschlossvorrichtung 2 und eine Draufsicht von vorne auf den Kopfabschnitt 4a der Ummantelung 4 gezeigt. Eine innere Breite bzw. Innenmaßbreite B1 des Kopfabschnitts 4a der Ummantelung 4 entspricht einer äußeren Breite bzw. Außenmaßbreite B2 des Schlosskopfgehäuses 20.

Die Figur 5b zeigt eine Querschnittsdarstellung des Kopfabschnitts 4a der Ummantelung 4 entlang der Schnittlinie F-F aus den Figuren 3 und 5a und eine Draufsicht von oben auf das mit der Ummantelung 4 ummantelte Schlosskopfgehäuse 20, insbesondere auf die Gehäuseöffnung 20a. Eine Materialstärke der Ummantelung 4 beträgt vorzugsweise mindestens 1,7 Millimeter, insbesondere mindestens 1,9 Millimeter und/oder maximal bis zu 2,4 Millimeter. Eine innere Tiefe bzw. Innenmaßtiefe T1 der Ummantelung 4, insbesondere im Bereich des Kopfabschnitts 4a, entspricht einer äußeren Tiefe bzw. Außenmaßtiefe T2 des Schlosskopfgehäuses 20. Durch die Übereinstimmung der Breiten B1, B2 und der Tiefen T1, T2 kann die Ummantelung 4 das Schlosskopfgehäuse 20 mit dem Kopfabschnitt 4a formschlüssig, insbesondere in einer Übergangspassung oder Presspassung, ummanteln (siehe auch Fig. 5b). Somit kann die Ummantelung 4 sicher und rutschfrei an der ersten Gurtschlossvorrichtung 2 befestigt werden.

Zur Anordnung der Ummantelung 4 an der ersten Gurtschlossvorrichtung 2 wird das Anbindungselement 21 und der Kabelstrang 22 von unten in den Fußabschnitt 4b eingesteckt und durch die Ummantelung 4 gezogen, bis sie mit ihren oberen Enden, an denen die Gegenschnittstellen 21a, 22a angeordnet sind, aus dem Kopfabschnitt 4a herausragen. Die elektrische Gegenschnittstelle 22a wird an die elektrische Schnittstelle 20d in dem ersten Gehäuseabschnitt 23a des Schlosskopfgehäuses 22 angebunden und die mechanische Gegenschnittstelle 21a wird mit der mechanischen Schnittstelle 20e in dem ersten Gehäuseabschnitt 23a verbunden.

Anschließend werden der erste und zweite Gehäuseabschnitt 23a, 23b zusammengesetzt und formschlüssig miteinander zu dem Schlosskopfgehäuse 20 verbunden. Die Ummantelung 4 wird nun weiter nach oben über das Schlosskopfgehäuse 20 gezogen, bis sie den Randbereich 24 erreicht. Insbesondere schließt der Kopfabschnitt 4a mit dem unteren Rand des Randbereich 24 ab oder er ragt ein kleines Stück in diesen hinein.

Der in den Fußabschnitt 4b der Ummantelung 4 eingebrachte Schlitz 6 dient zum Aufdehnen während der Montage der Ummantelung 4 und damit zur Vereinfachung des Überziehens über die erste Gurtschlossvorrichtung 2 sowie zur Erhöhung einer Flexibilität der Ummantelung, die eine Voraussetzung für ein erfolgreiches Bestehen von Biegewechselprüfungen während einer Komponentenvalidierung ist. Wie in der Figur 1 gezeigt, erstreckt sich die Ummantelung 4, wenn sie die erste Gurtschlossvorrichtung 2 ummantelt, in deren Längserstreckung L1 von dem Randbereich 24 bis zu dem unteren Ende E des Verbindungsabschnitts 5.

Die Ummantelung 4 ist dazu vorgesehen, eine Gefahr eines ungewollten und/oder unbemerkten Abschnallens des zweiten Insassens der Sitzbank, der mittels der zweiten Gurtschlossvorrichtung 3 angeschnallt ist, abzuwenden. Denn für den Fall, dass die erste Gurtschlossvorrichtung 2 keine Ummantelung 4 aufweisen würde, bestünde die Gefahr, dass die Drucktaste 30b der zweiten Gurtschlossvorrichtung 3 durch das Schlosskopfgehäuse 20 der ersten Gurtschlossvorrichtung 2, insbesondere durch mindestens eine Ecke, Unterkante und/oder Seitenkante, betätigt wird, die Gurtzunge dadurch entriegelt wird und sich aus der Öffnung löst, wodurch keine Rückhaltewirkung für den Insassen mehr bestünde. Die Gefahr, dass das Schlosskopfgehäuse 20 über die Gehäuseöffnung 30a des Schlosskopfgehäuses 30 der zweiten Gurtschlossvorrichtung 3 rutscht ist insbesondere dadurch gegeben, dass die erste Gurtschlossvorrichtung 2 die zweite Gurtschlossvorrichtung 3 längenmäßig überragt und dass das Anbindungselement 31 der zweiten Gurtschlossvorrichtung 3 starr und/oder biegesteif ist, wogegen das Anbindungselement 21 der ersten Gurtschlossvorrichtung 2 dagegen biegsam und flexibel ist. Die ungewünschte Betätigung der Drucktaste 30b kann z. B. dann erfolgen, wenn sich der Insasse, der mit der ersten Gurtschlossvorrichtung 2 angeschnallt ist, auf der Sitzbank bewegt oder auch durch Kräfte, die durch einen Aufprall des Fahrzeugs oder durch eine schnelle Kurvenfahrt auf die Gurtschlossanordnung und den/die Insassen wirken.

Dadurch, dass die Ummantelung 4 vorgesehen ist und die erste Gurtschlossvorrichtung 2 teilweise ummantelt, sind alle Ecken, Seitenkanten und/oder Unterkanten des Schlosskopfgehäuses 20 in Längserstreckung L1 und radial vollständig bedeckt und/oder umhüllt. Dadurch sind die Kanten und Ecken nach außen verdeckt und somit nicht mehr zur Betätigung der Drucktaste 30b der zweiten Gurtschlossvorrichtung 3 geeignet.

Ein weiterer Vorteil der Ummantelung 4 ist, dass unerwünschte Klappergeräusche zwischen den beiden Gurtschlossvorrichtung 2, 3 vermieden werden können. Weiterhin ist es vorteilhaft, dass die Ummantelung 4 die erste Gurtschlossvorrichtung 2 schützend umgibt, insbesondere schlag- und/oder knickempfindliche Vorrichtungen wie zum Beispiel der Verbindungsabschnitt 5 bedeckt.

Während vorstehend mindestens ein Ausführungsbeispiel detailliert offenbart wurde, ist es anzuerkennen, dass eine Vielzahl von erfindungsgemäßen Variationen existieren. Es ist ebenfalls anzuerkennen, dass das mindestens eine Ausführungsbeispiel nur beispielhaften Charakter hat und keine Begrenzung des Schutzumfangs, der Anwendungsgebiete oder der Konfiguration darstellt. Vielmehr soll die vorliegende Offenbarung einen angenehmen Fahrplan zur Umsetzung mindestens eines Ausführungsbeispiels sein. Somit sollte es anzuerkennen sein, dass verschiedene Variationen der Funktion oder der Anordnung der Elemente des mindestens einen Ausführungsbeispiels umgesetzt werden können, ohne den Umfang zu verlassen, der durch die Ansprüche vorgegeben ist.

### Bezugszeichenliste:

- 1: Gurtschlossanordnung
- 2: erste Gurtschlossvorrichtung
- 3: zweite Gurtschlossvorrichtung
- 4: Ummantelung
- 4a: Kopfabschnitt
- 4b: Fußabschnitt
- 5: Verbindungsabschnitt
- 6: Schlitz
- 7: Verankerungsschnittstellen
- 20: Schlosskopfgehäuse der ersten Gurtschlossvorrichtung
- 20a: Gehäuseöffnung
- 20b: Drucktaste
- 20c: Öffnung für Gurtschlosszunge
- 20d: elektrische Kontaktschnittstelle
- 20e: mechanische Befestigungsschnittstelle
- 21: Anbindungselement
- 21a: elektrische Gegenschnittstelle
- 22: Kabelstrang
- 22a: elektrische Gegenschnittstelle
- 23a: erster Gehäuseabschnitt
- 23b: zweiter Gehäuseabschnitt
- 24: Randabschnitt
- 30: Schlosskopfgehäuse der zweiten Gurtschlossvorrichtung
- 30a: Gehäuseöffnung
- 30b: Drucktaste
- 30c: Öffnung für Gurtschlosszunge
- E: unteres Ende
- L1: Längserstreckung Gurtschlossvorrichtung
- L2: Längserstreckung Ummantelung
- u: unten
- V: Verankerungspunkt

## Patentansprüche

1. Gurtschlossanordnung (1) für ein Fahrzeug,
mit einer ersten Gurtschlossvorrichtung (2) und mit einer zweiten Gurtschlossvorrichtung (3),
wobei die Gurtschlossvorrichtungen (2, 3) nebeneinander oder hintereinander angeordnet sind und/oder sich bereichsweise kontaktieren oder kontaktieren können,
mit einer Ummantelung (4), wobei die erste Gurtschlossvorrichtung (2) ein Anbindungselement (21) umfasst und von der Ummantelung (4) teilweise ummantelt ist und wobei die zweite Gurtschlossvorrichtung (3) ummantelungsfrei ist,
wobei die Ummantelung (4) einen Kopfabschnitt (4a) zum bereichsweisen Ummanteln eines Schlosskopfgehäuses (20) der ersten Gurtschlossvorrichtung (2) und einen nach unten ausgerichteten Fußabschnitt (4b) zur bereichsweisen Ummantelung des Anbindungselements (21) der ersten Gurtschlossvorrichtung (2) aufweist und eines Kabelstrangs (22) der ersten Gurtschlossvorrichtung (2) aufweist, wobei die Ummantelung (4) entlang ihrer Längserstreckung (L2) zum Fußabschnitt (4b) verjüngt ausgebildet ist
**dadurch gekennzeichnet, dass**
in dem Fußabschnitt (4b) ein Schlitz (6) eingebracht ist, der entlang der Längserstreckung (L2) der Ummantelung (4) verläuft, wobei die Ummantelung (4) durch den Schlitz (6) einfach und schnell an der ersten Gurtschlossvorrichtung (2) montierbar ist,
wobei jede der Gurtschlossvorrichtungen (2, 3) ein Schlosskopfgehäuse (20, 30) mit einer kopfseitigen Gehäuseöffnung (20a, 30a), ein Anbindungselement (21, 31) und einen Kabelstrang (22, 32) umfasst, wobei das Anbindungselement (21, 31) und der Kabelstrang (22, 32) in dem Schlosskopfgehäuse (20, 30) befestigt sind und von diesem nach unten (u) abstehen, wobei zumindest das Anbindungselement (21) und der Kabelstrang (22) der ersten Gurtschlossvorrichtung (2) außerhalb des entsprechenden Schlosskopfgehäuses (20) in einem Verbindungsabschnitt (5) miteinander verbunden sind, wobei der Verbindungsabschnitt (5) ein unteres Ende (E) aufweist, wobei sich die Ummantelung (4) von dem unteren Ende (E) des Verbindungsabschnitts (5) zu dem Schlosskopfgehäuse (20) der ersten Gurtschlossvorrichtung (2) erstreckt.

2. Gurtschlossanordnung (1) nach Anspruch 1, wobei die erste Gurtschlossvorrichtung (2) die zweite Gurtschlossvorrichtung (3) längenmäßig überragt.

3. Gurtschlossanordnung (1) nach Anspruch 2, wobei das Schlosskopfgehäuse (20) der ersten Gurtschlossvorrichtung (2) einen sich an die entsprechende Gehäuseöffnung (20a) anschließenden Randbereich (24) aufweist, wobei sich die Ummantelung (4) von dem unteren Ende (E) des Verbindungsabschnitts (5) bis zu dem Randbereich (24) und/oder in den Randbereich (24) hinein erstreckt.

4. Gurtschlossanordnung (1) nach Anspruch 2 oder 3, wobei das Anbindungselement (21) der ersten Gurtschlossvorrichtung (2) flexibel und/oder biegsam ist und/oder wobei das Anbindungselement (31) der zweiten Gurtschlossvorrichtung (3) biegesteif und/oder starr ist.

5. Gurtschlossanordnung (1) nach einem der vorhergehenden Ansprüche, wobei die Ummantelung (4) ein langgestreckter Hohlkörper ist.

6. Gurtschlossanordnung (1) nach einem der vorhergehenden Ansprüche, wobei die Ummantelung (4) einen im Wesentlichen rechteckigen Querschnitt aufweist.

7. Gurtschlossanordnung (1) nach einem der vorhergehenden Ansprüche, wobei die Ummantelung (4) eine Materialstärke von mindestens 1,7 Millimetern, vorzugsweise von mindestens 1,9 Millimetern und/oder von maximal bis zu 2,4 Millimetern aufweist.

8. Gurtschlossanordnung (1) nach einem der vorhergehenden Ansprüche, wobei die Ummantelung (4) aus einem thermoplastischen Elastomer mit einer Shore A Härte von mindestens 40, vorzugsweise von mindestens 60 und/oder von maximal bis zu 80 gebildet ist.

9. Gurtschlossanordnung (1) nach einem der vorhergehenden Ansprüche, wobei die Ummantelung (4) den Kopfabschnitt (4a) zum Ummanteln des Schlosskopfgehäuses (20) und den verjüngten Fußabschnitt (4b) zur Ummantelung des Verbindungsabschnitts (5) und zur zumindest teilweisen Ummantelung des Anbindungselements (21) und des Kabelstrangs (22) umfasst.

10. Gurtschlossanordnung (1) nach Anspruch 9, wobei eine innere Breite (B1) des Kopfabschnitts (4a) einer äußeren Breite (B2) des Schlosskopfgehäuses (20) entspricht und/oder wobei eine innere Tiefe (T1) des Kopfabschnitts (4a) einer äußeren Tiefe (T2) des Schlosskopfgehäuses (20) entspricht.

11. Gurtschlossanordnung (1) nach Anspruch 9 oder 10, wobei der Schlitz (6) in dem Fußabschnitt (4b) ein in die Längserstreckung (L2) der Ummantelung (4) verläuft.

12. Fahrzeug mit der Gurtschlossanordnung (1) nach einem der vorhergehenden Ansprüche.

## Claims

1. Seat belt buckle arrangement (1) for a vehicle,
with a first buckle device (2) and with a second buckle device (3),
wherein the seat belt buckle devices (2, 3) are arranged next to one another or one behind the other and/or contact or can contact each other in certain areas, with a casing (4), wherein the first belt buckle device (2) comprises a connecting element (21) and is partially encased by the casing (4) and wherein the second belt buckle device (3) has no casing, wherein the casing (4) has a head section (4a) for covering areas of a lock head housing (20) of the first belt lock device (2) and a downwardly directed foot section (4b) for covering areas of the connection element (21) of the first belt lock device (2) and a cable harness (22) of the first belt lock device (2), the casing (4) being tapered along its longitudinal extent (L2) towards the foot section (4b). **characterized in that** a slot (6) is introduced in the foot section (4b), which runs along the longitudinal extension (L2) of the casing (4), the casing (4) being easily and quickly attached to the first buckle device (2) through the slot (6). is mountable, wherein each of the belt lock devices (2, 3) comprises a lock head housing (20, 30) with a head-side housing opening (20a, 30a), a connection element (21, 31) and a cable harness (22, 32), the connection element (21, 31 ) and the cable harness (22, 32) are fastened in the lock head housing (20, 30) and protrude downwards (u) from it, with at least the connecting element (21) and the cable harness (22) of the first belt lock device (2) being outside of the corresponding lock head housing (20) are connected to each other in a connecting section (5), the connecting section (5) having a lower end (E), the casing (4) extending from the lower end (E) of the connecting section (5) to the Lock head housing (20) of the first buckle device (2).

2. Belt lock arrangement (1) according to claim 1, wherein the first belt lock device (2) projects beyond the second belt lock device (3) in terms of length.

3. Belt lock arrangement (1) according to claim 2, wherein the lock head housing (20) of the first belt lock device (2) has an edge region (24) adjoining the corresponding housing opening (20a), the casing (4) extending from the lower end ( E) of the connecting section (5) as far as the edge area (24) and/or into the edge area (24).

4. Belt lock arrangement (1) according to claim 2 or 3, wherein the connection element (21) of the first belt lock device (2) is flexible and/or pliable and/or the connection element (31) of the second belt lock device (3) is rigid and/or rigid is.

5. Belt buckle arrangement (1) according to any one of the preceding claims, wherein the casing (4) is an elongated hollow body.

6. Belt lock assembly (1) according to any one of the preceding claims, wherein the casing (4) has a substantially rectangular cross section.

7. Belt buckle arrangement (1) according to any one of the preceding claims, wherein the casing (4) has a material thickness of at least 1.7 millimeters, preferably at least 1.9 millimeters and / or at most up to 2.4 millimeters.

8. Belt buckle arrangement (1) according to one of the preceding claims, wherein the casing (4) is formed from a thermoplastic elastomer with a Shore A hardness of at least 40, preferably at least 60 and/or up to 80 at most.

9. The belt lock arrangement (1) according to any one of the preceding claims, wherein the casing (4) has the head section (4a) for encasing the lock head housing (20) and the tapered foot section (4b) for encasing the connecting section (5) and for at least partially encasing the Connection element (21) and the cable harness (22).

10. Belt lock arrangement (1) according to claim 9, wherein an inner width (B1) of the head section (4a) corresponds to an outer width (B2) of the lock head housing (20) and/or wherein an inner depth (T1) of the head section (4a) corresponds to a outer depth (T2) of the lock head housing (20) corresponds.

11. Belt lock arrangement (1) according to claim 9 or 10, wherein the slot (6) in the foot section (4b) extends into the longitudinal extent (L2) of the casing (4).

12. Vehicle with the buckle assembly (1) according to any one of the preceding claims.

## Revendications

1. Agencement de boucle de ceinture de sécurité (1) pour un véhicule,
avec un premier dispositif de boucle (2) et avec un deuxième dispositif de boucle (3), dans lequel les dispositifs de boucle de ceinture de sécurité (2, 3) sont disposés l'un à côté de l'autre ou l'un derrière l'autre et/ou se touchent ou peuvent se toucher dans certaines zones, avec un boîtier (4), dans lequel le premier dispositif de boucle de ceinture (2) comprend un élément de liaison (21) et est partiellement enveloppé par le boîtier (4) et dans lequel le deuxième dispositif de boucle de ceinture (3) n'a pas de boîtier, dans lequel le boîtier (4) a une section de tête (4a) pour couvrir des zones d'un boîtier de tête de verrouillage (20) du premier dispositif de verrouillage de ceinture (2) et une section de pied dirigée vers le bas (4b) pour couvrir des zones de l'élément de connexion ( 21) du premier dispositif de verrouillage de ceinture (2) et un faisceau de câbles (22) du premier dispositif de verrouillage de ceinture (2), le boîtier (4) étant effilé le long de son étendue longitudinale (L2) vers la section de pied (4b). **caractérisé en ce que** une fente (6) est introduite dans la section de pied (4b), qui s'étend le long de l'extension longitudinale (L2) du boîtier (4), le boîtier (4) étant facilement et rapidement attaché au premier dispositif de boucle (2) par la fente (6) peut être montée, dans lequel chacun des dispositifs de verrouillage de ceinture (2, 3) comprend un boîtier de tête de verrouillage (20, 30) avec une ouverture de boîtier côté tête (20a, 30a), un élément de connexion (21, 31) et un faisceau de câbles (22, 32), l'élément de connexion (21, 31 ) et le faisceau de câbles (22, 32) sont fixés dans le boîtier de tête de verrouillage (20, 30) et dépassent vers le bas (u) de celui-ci, avec au moins l'élément de connexion (21) et le faisceau de câbles (22) du premier dispositif de verrouillage de ceinture (2) étant à l'extérieur du boîtier de tête de verrouillage correspondant (20) sont connectés les uns aux autres dans une section de connexion (5), la section de connexion (5) ayant une extrémité inférieure (E), le boîtier (4) s'étendant de l'extrémité inférieure (E) de la section de connexion (5) au boîtier de tête de verrouillage (20) du premier dispositif de boucle (2).

2. Agencement de verrouillage de ceinture (1) selon la revendication 1, dans lequel le premier dispositif de verrouillage de ceinture (2) fait saillie au-delà du deuxième dispositif de verrouillage de ceinture (3) en termes de longueur.

3. Agencement de verrouillage de ceinture (1) selon la revendication 2, dans lequel le boîtier de tête de verrouillage (20) du premier dispositif de verrouillage de ceinture (2) a une région de bord (24) contiguë à l'ouverture de boîtier correspondante (20a), le boîtier (4 ) s'étendant depuis l'extrémité inférieure (E) du tronçon de raccordement (5) jusqu'à la zone de bord (24) et/ou dans la zone de bord (24).

4. Agencement de verrouillage de ceinture (1) selon la revendication 2 ou 3, dans lequel l'élément de connexion (21) du premier dispositif de verrouillage de ceinture (2) est flexible et/ou pliable et/ou l'élément de connexion (31) de la deuxième ceinture le dispositif de verrouillage (3) est rigide et/ou rigide est.

5. Agencement de boucle de ceinture (1) selon l'une quelconque des revendications précédentes, dans lequel le boîtier (4) est un corps creux allongé.

6. Ensemble de verrouillage de ceinture (1) selon l'une quelconque des revendications précédentes, dans lequel le boîtier (4) a une section transversale sensiblement rectangulaire.

7. Agencement de boucle de ceinture (1) selon l'une quelconque des revendications précédentes, dans lequel l'enveloppe (4) a une épaisseur de matière d'au moins 1,7 millimètres, de préférence d'au moins 1,9 millimètres et/ou d'au plus jusqu'à 2,4 millimètres.

8. Agencement de boucle de ceinture (1) selon l'une des revendications précédentes, dans lequel l'enveloppe (4) est formée d'un élastomère thermoplastique de dureté Shore A d'au moins 40, de préférence d'au moins 60 et/ou jusqu'à 80 au plus..

9. Agencement de verrouillage de ceinture (1) selon l'une quelconque des revendications précédentes, dans lequel le boîtier (4) a la section de tête (4a) pour enfermer le boîtier de tête de verrouillage (20) et la section de pied conique (4b) pour enfermer le tronçon de raccordement (5) et pour enrober au moins partiellement l'élément de raccordement (21) et le faisceau de câbles (22).

10. Agencement de serrure de ceinture (1) selon la revendication 9, dans lequel une largeur intérieure (B1) de la section de tête (4a) correspond à une largeur extérieure (B2) du boîtier de tête de serrure (20) et/ou dans lequel une profondeur intérieure (T1) de la section de tête (4a) correspond à une profondeur extérieure (T2) du logement de tête de verrou (20).

11. Agencement de verrouillage de ceinture (1) selon la revendication 9 ou 10, dans lequel la fente (6) dans la section de pied (4b) s'étend dans l'étendue longitudinale (L2) du boîtier (4).

12. Véhicule avec l'ensemble de bouclage (1) selon l'une quelconque des revendications précédentes.
